# EUROPEAN PATENT APPLICATION

(11) **EP 2 706 775 A1**
(43) Date of publication of application: **12.03.2014**
(21) Application number: 13004261.7
(22) Date of filing: 29.08.2013
(51) Int. Cl.: H04W 24/08

(54) **Performance Determination and Management of Integrated Radio Access and Transport Networks**

(30) Priority: 31.08.2012 US 201261695779 P
(71) Applicant: Telefonaktiebolaget L M Ericsson (Publ), 164 83 Stockholm (SE)
(72) Inventor: Vaderna, Peter, 1174 Budapest (HU); Benkõ, Péter, 1039 Budapest (HU); Gerö, Balázs Peter, 1095 Budapest (HU); Rosenberg, Jonas Emanuel, 191 38 Sollentuna (SE)
(74) Representative: Röthinger, Rainer

(57) **Abstract**

A technique is disclosed for either determining or facilitating the determination of the impact of transport network (TN) performance at a subscriber level. According to one realization, a Network Management Subsystem (NMS) node obtains a mapping of one or more TN services affected by a TN (Key Performance Indicator) KPI value not meeting its associated acceptable performance threshold during a measurement period to one or more Radio Access Network (RAN) interfaces. A list of transactions occurring on the one or more RAN interfaces during the measurement period is determined. Based on the TN KPI value and the transaction list, either a significance of the TN KPI value not meeting its associated acceptable performance threshold during the measurement period on network performance at the subscriber level is determined, or the TN KPI value and the transaction list are provided to a second NMS node for such a determination.

## Description

### Technical Field

The present disclosure generally relates to analyzing wireless communication network performance, and more particularly to determining or facilitating the determination of the impact of transport network (TN) performance at a subscriber level. The technique presented herein can be performed as a method, computer program or a system.

### Background

Performance management is important for network operators to be able to ensure service quality. One of the key issues in performance management is the identification of a performance problem. This is achieved by collecting and analyzing measurements of Key Performance Indicators (KPIs). Another very important issue is the localization and finding the root cause of the problem in case of performance degradation (Root Cause Analysis or "RCA"). A third aspect in performance management is to provide impact analysis, i.e., to obtain the impact of events (planned or unexpected), such as installing new nodes, introducing new terminal types, major failure in the network, etc.

State-of-the-art (cellular) radio and (mobile) core network management systems (NMS) have performance management extensions that provide impact analysis and also RCA functionality as it is described in WO 2005/076644A. These systems rely on measurements in Radio Access Network (RAN) and Mobile Core Network (CN). The measurements include counters, event logs, alarms provided by the RAN and CN nodes (e.g., RBS, RNC, SGSN, etc.), passive monitoring on interfaces and parsing and detecting protocol messages and data flows going through the interface, and standardized Quality of Experience (QoE) terminal reports.

In order to be able to localize problems, find root cause or make impact analysis, measurements are collected from different segments of the RAN/CN. These measurements are obtained on a radio network subscriber basis, and are correlated later on so that events related to one radio network subscriber are grouped together in one session. User transaction records are available, then, where one record contains one user session with time information (start time, end time), location/mobility information (list of cells visited), user id (e.g., International Mobile Subscriber Identity or "IMSI"), service performance information (average throughput, average round-trip delay), radio performance information (average radio signal strength, average radio interference), and/or user terminal type (type, model, vendor) information. As will be appreciated, the terms transaction and session as used herein essentially designate the same concept.

Different KPIs can be derived from the measurements and the correlated transactions. Some of the KPIs are related to service performance (e.g., web page download time, video re-buffering ratio, download speed in bulk transfer, etc.) and radio performance (e.g., session setup time, session drop ratio, handover success ratio, radio signal strength, radio interference, etc.).

State-of-the-art transport network (TN) management systems provide the following functionality:
- Inventory data on network element configuration including configurations of (transport) services (e.g. IP Virtual Private Network (VPN), VLAN), i.e. service inventory data;
- Topology information and locations of network elements; and
- Support for Service Level Agreement (SLA) monitoring including scheduling and configuring passive and/or active performance management sessions on service and/or transport layers.

Existing transport network (TN) management tools are insufficient for measuring performance of radio network subscribers (e.g., web page download time, video re-buffering ratio, download speed, etc.). Transport network management tools have neither the intention nor the means to look deeper into services than the service delimiters (of services provided by the transport network) as they manage the radio network as any other transparent 3^{rd} party service.

A discussion of such service delimiters can be found in the section 4 of the Internet Engineering Task Force (IETF) RFC 4448 document. These service delimiters are a standard way for a transport service provider to distinguish traffic (e.g. traffic of different customers), by the placement of a service-delimiting VLAN tag placed on an Ethernet frame by some piece of service provider-operated equipment. Furthermore, maintaining radio network subscriber level information (e.g., performance of radio network subscribers) in the transport network does not scale and would therefore not be a feasible solution.

Existing radio and core network management systems regard the transport network as black box from the point of view of performance management in RAN/CN. Therefore, when errors occur in the TN, it is not possible to directly connect such errors to radio network subscriber level performance. Consequently, neither the number of impacted radio network subscribers nor their performance degradation can be obtained in case of TN problem.

Thus, state-of-the-art Performance Management (PM) measurements in the TNs used by RANs are insufficient to quantify the effect of TN performance problems on mobile network subscribers. Therefore, mobile operators cannot judge the severity of RAN transport performance incidents.

### Summary

Accordingly, there is a need for a technique that permits to better evaluate the impacts of TN performance problems beyond an individual TN.

According to one aspect, a method is provided of determining, at a subscriber level, an impact of a performance of a transport network in a communication network comprising the transport network and a radio access network connected to the transport network. The method comprises obtaining, at a first NMS node of the communication network, a mapping of one or more TN services to one or more RAN interfaces, wherein the TN services are affected by a TN KPI value not meeting a network performance condition during a performance measurement period. The method further comprises determining, at the first NMS node, a list of subscriber transactions occurring on the one or more RAN interfaces during the measurement period, and determining, at the first NMS node, based on the TN KPI value and the transaction list, an impact of the TN KPI value not meeting the network performance condition on network performance at the subscriber level, or providing the TN KPI value and the transaction list to a second NMS node of the communication network for such a determination.

In one variant, a fine granularity (e.g., subscriber level granularity) of the impact of the TN KPI value not meeting the network performance condition on network performance can be determined. Such a determination may enable to improve PM.

The network performance condition may be an acceptable network performance threshold associated with the KPI. Accordingly, the network performance condition may be evaluated by a threshold decision.

The list of transactions may be obtained from subscriber transaction logs. Since subscriber transaction logs are available anyhow, the determination of the subscriber transaction list can be implemented with only little effort (e.g., using already existing functionality).

The obtaining step may comprise receiving a first mapping of one or more affected TN services to one or more TN edge interfaces. Optionally, a second mapping that maps the one or more TN edge interfaces to the one or more RAN interfaces may be generated.

The method may further comprise determining, at a third NMS node, whether the TN KPI value has not met the network performance condition during the measurement period. One or more TN services affected by the TN KPI may also be determined. A list of the one or more affected TN services and a list of one or more TN edge interfaces affected by the one or more affected TN services as the first mapping may then be provided to the first NMS node. In this way, the effort to carry out individual method steps can be distributed over a plurality of NMS nodes. Thereby, the impact determining procedure may in certain variants be speeded up.

Impact determination may for example comprise identifying one or more groups of subscribers connected to cells of the radio access network affected by the list of transactions and/or determining a quantity of wireless terminals connected to the affected cells. Additionally, or in the alternative, a statistical analysis based on a deviation between the TN KPI value and its associated network performance condition may be performed.

In order to determine which/how much mobile communication units are affected by the network problem, the affected cells (in which a plurality of mobile communication units are located) may be determined. The impact may be determined per mobile communication unit (e.g., per subscriber).

Impact determination may also comprise receiving, at the second NMS node, the TN KPI value not meeting its associated network performance condition and the transaction list indicating transactions occurring on one or more RAN interfaces during the measurement period. Based on the TN KPI value and the transaction list, an impact of the TN KPI value on network performance at the subscriber level may be determined. Also in this way, the effort to carry out the method steps can be distributed over a plurality of NMS nodes.

The influence of the network problem on the mobile communication units may generally be determined individually for each mobile communication unit. In some implementations, the "sum of influences" for a plurality of mobile communication units (e.g., for an affected cell) could also be determined (e.g., from the individually determined influences).

The first NMS node may be a RAN & CN NMS node and/or the second NMS node may be an end-to-end performance management NMS node. In addition, or as an alternative, the third NMS node may be a TN NMS node. Other node configurations are also possible.

The TN edge interface may include at least one user-to-network interface, UNI, connecting the radio access network to the transport network, or at least one external network-to-network interface, ENNI, connecting a core network to the transport network.

According to a further aspect, a method of operating a TN NMS node of a communication network is provided, the communication network comprising a transport network and a radio access network connected to the transport network. The method comprises determining whether a TN KPI value of the transport network has not met a network performance condition during a measurement period. The method further comprises determining one or more TN services affected by the TN KPI, and transmitting at least one of a list of the one or more affected TN services and a list of one or more TN edge interfaces affected by the one or more affected TN services from the TN NMS node to a further NMS node of the communication network.

According to a still further aspect, a method of operating an end-to-end performance management NMS node of a communication network is provided, the communication network comprising a transport network and a radio access network connected to the transport network. The method comprises receiving a transaction list indicating transactions occurring on one or more RAN interfaces during a measurement period, the transactions stemming from one or more TN services affected by a TN KPI value of the transport network which has not met a network performance condition during a measurement period. The method further comprises determining, based on the TN KPI value and the transaction list, an impact of the TN KPI not meeting the network performance condition during the measurement period on the network performance of the communication network at a subscriber level.

Also provided is a computer program product comprising program code portions for performing the methods or method aspects disclosed herein when the computer program product is executed by a computing device. The computer program product may be stored on a computer-readable recording medium, such as a CD-ROM, DVD or semiconductor memory. The computer program product may also be provided for download via a communication network.

According to another aspect of the present invention, a NMS node of a communication network comprising a transport network and a radio access network connected to the transport network is provided. The NMS node comprises a receiving unit configured to receive a mapping of one or more TN services to one or more RAN interfaces, wherein the TN services are affected by a TN KPI value not meeting a network performance condition during a performance measurement period. The NMS node further comprises a determining unit configured to determine a list of subscriber transactions occurring on the one or more RAN interfaces during the measurement period, and configured to determine, based on the TN KPI value and the transaction list, an impact of the TN KPI value not meeting the network performance condition on network performance at the subscriber level. The NMS node may further comprise a transmitting unit for transmitting the TN KPI value and the transaction list to a further NMS node.

According to an aspect of the present invention, a TN NMS node of a communication network comprising the transport network and a radio access network connected to the transport network is provided. The TN NMS node comprises a determining unit configured to determine whether a TN KPI value of the transport network has not met a network performance condition during a measurement period. The determining unit is further configured to determine one or more TN services affected by the TN KPI. Further, a transmitting unit is provided configured to transmit a list of the one or more affected TN services, a list of one or more TN edge interfaces affected by the one or more affected TN services, or both, from the TN NMS node to a further NMS node of the communication network.

According to an aspect of the present invention, a NMS node of a communication network comprising the transport network and a radio access network connected to the transport network is provided. The NMS node comprises a receiving unit configured to receive a transaction list indicating transactions occurring on one or more RAN interfaces during a measurement period, the transactions stemming from one or more TN services affected by a TN KPI value of the transport network which has not met a network performance condition during a measurement period. The NMS node further comprises a determining unit configured to determine, based on the TN KPI value and the transaction list, an impact of the TN KPI not meeting the network performance condition during the measurement period on the network performance of the communication network at a subscriber level.

Moreover, according to one exemplary realization, a method is disclosed of either determining or facilitating the determination of the impact of TN performance at a subscriber level, with the method being performed by a first NMS node. A mapping is obtained of one or more TN services affected by a TN KPI value not meeting its associated acceptable performance threshold during a measurement period to one or more RAN interfaces. A list of transactions occurring on the one or more RAN interfaces during the measurement period is determined. Based on the TN KPI value and the transaction list, either a significance of the TN KPI value not meeting its associated acceptable performance threshold during the measurement period on network performance at the subscriber level is determined, or the TN KPI value and the transaction list are provided to a second NMS node for such a determination. In this realization, the first NMS node may be a RAN & Core Network (CN) NMS node, and the second NMS node may be a TN NMS node.

In one example, the obtaining of a mapping of one or more TN services affected by a TN KPI value not meeting its associated acceptable performance threshold during a measurement period includes: receiving a first mapping of one or more TN edge interfaces affected by the one or more TN services, and determining second mapping that maps the one or more TN edge interfaces to the one or more RAN services. The TN edge interfaces may include at least one UNI connecting the RAN to the TN, at least one external network-to-network interface ENNI connecting a CN to the TN, or both.

In one example, the determining a significance of the TN KPI value not meeting its associated acceptable performance threshold during the measurement period on network performance at the subscriber level includes performing at least one of: identifying one or more groups of subscribers connected to cells affected by the list of transactions; determining a quantity of wireless terminals connected to the affected cells; and performing a statistical analysis based on a deviation between the TN KPI value and its associated acceptable performance threshold.

According to the same or another realization as the one described above, a further method is disclosed of determining or facilitating the determination of the impact of TN performance issues at a subscriber level, with the method being performed by a first NMS node. A determination is made that a TN KPI value has not met an associated acceptable performance threshold for its associated KPI during a measurement period. One or more TN services affected by the TN KPI are determined. A list of the one or more TN services, a list of one or more TN edge interfaces affected by the one or more TN services, or both, are provided to a second NMS node.

According to this further method, the first NMS node may be a TN NMS node, and the second NMS node may be a RAN & CN NMS node. This method may also include the step of mapping the one or more TN services to the TN edge interfaces in the list, and providing the mapping to the second NMS node. In one example, the TN edge interfaces include at least one UNI connecting a RAN to the TN, at least one ENNI connecting a CN to the TN, or both.

In one example, this further method includes the following steps: receiving a transaction list from the second NMS node indicating transactions occurring on one or more RAN interfaces during the measurement period, the transactions stemming from the one or more listed TN services; and based on the TN KPI value and the transaction list, determining a significance of the TN KPI not meeting its associated acceptable performance threshold during the measurement period on network performance at the subscriber level.

The determination of a significance of the TN KPI value not meeting its associated acceptable performance threshold during the measurement period on network performance at the subscriber level may include at least one of the following: identifying one or more groups of subscribers connected to cells affected by the list of transactions; determining a quantity of wireless terminals connected to the affected cells; and performing a statistical analysis based on a deviation between the TN KPI value and its associated acceptable performance threshold.

NMS nodes configured to perform the described methods are also disclosed. Thus, according to one realization, a Radio & CN NMS node includes a processor, transceiver and memory. The NMS node is operative to either determine or facilitate the determination of the impact of TN performance at a subscriber level. The processor is configured to obtain a mapping of one or more TN services affected by a TN KPI value not meeting its associated acceptable performance threshold during a measurement period to one or more RAN interfaces. The processor is further configured to determine a list of transactions occurring on the one or more RAN interfaces during the measurement period. Based on the TN KPI value and the transaction list, the processor is configured to either determine a significance of the TN KPI value not meeting its associated acceptable performance threshold during the measurement period on network performance at the subscriber level, or provide the TN KPI value and the transaction list to a second NMS node via the transceiver for such a determination. The memory stores instructions for configuring the NMS node to perform the described operations.

In the same or another realization, a TN NMS node also includes a processor, transceiver and memory. The TN NMS node is operative to determine or facilitate the determination of the impact of TN performance issues at a subscriber level. The processor is configured to determine that a TN KPI value has not met an associated acceptable performance threshold for its associated KPI during a measurement period, and to determine one or more TN services affected by the TN KPI are determined. The processor is configured to provide a list of the one or more TN services, a list of one or more TN edge interfaces affected by the one or more TN services, or both, to a second NMS node via the transceiver. The memory stores instructions for configuring the TN NMS node to perform the described operations.

Of course, the present disclosure is not limited to the above features and advantages. Indeed, those skilled in the art will recognize additional features and advantages upon reading the following detailed description, and upon viewing the accompanying drawings.

### Brief Description of the Drawings

- Fig. 1: is a block diagram of an exemplary wireless communication network.
- Fig. 2: is a block diagram illustrating an improved Network Management System (NMS) configuration for the network of Fig. 1.
- Fig. 3: is a flow chart illustrating an exemplary method of determining the impact of transport network (TN) performance at a subscriber level.
- Fig. 4: illustrates another exemplary method of determining or facilitating the determination of the impact of TN performance at a subscriber level.
- Fig. 5: illustrates another exemplary method of determining or facilitating the determination of the impact of TN performance at a subscriber level.
- Figs. 6 to 10: illustrate exemplary NMS nodes.
- Fig. 11: illustrates another exemplary method of determining or facilitating the determination of the impact of TN performance at a subscriber level.
- Fig. 12: illustrates another exemplary method of determining or facilitating the determination of the impact of TN performance at a subscriber level.

### Detailed Description

In the following description of exemplary embodiments, for purposes of explanation and not limitation, specific details are set forth in order to provide a thorough understanding of the present disclosure. It will be apparent to one skilled in the art that the present disclosure may be practised in other embodiments that depart from these specific details.

Still further, those skilled in the art will appreciate that the services, functions and steps explained herein may be implemented using software functioning in conjunction with a programmed microprocessor, an Application Specific Integrated Circuit (ASIC), a Digital Signal Processor (DSP) or a general purpose computer. It will also be appreciated that while the following embodiments will primarily be described with reference to methods and devices, the present disclosure may also be embodied in a computer program product as well as in a system comprising a computer processor and a memory coupled to the processor, wherein the memory is encoded with one or more programs that may perform the services, functions and steps disclosed herein.

In the following a technique (embodied, e.g., in systems and methods) is disclosed for interpreting the results of state of the art active and/or passive transport PM measurements (e.g., link utilization, packet drop rate, etc.) by correlating them to per (radio network) subscriber KPI values (e.g., one or more of web page download time, video re-buffering ratio, download speed, etc.) available in state of the art radio and core NMS. The performance management system with the proposed extensions is able to quantify the effect of transport performance issues on the Quality of Service (QoS) experienced by the subscribers of the mobile network. For example, the seriousness of transport network bottleneck or the effect of a transport network fault/degradation can be quantified by showing the end user (mobile network subscriber) throughput for affected subscribers.

The additional functionalities proposed by the techniques (e.g., methods, systems and apparatus) described herein include one or more of:
- Identifying and listing the radio network subscriber sessions that are/were actually using a given part of the transport network on which the active and/or passive PM measurements are/were running, in the steps of:
   ■ monitoring and logging the mapping of radio network subscribers to RAN transport interfaces (e.g. Abis, Iub, S1 and X2) that the individual subscribers use;
   ■ collecting and establishing the mapping between RAN transport interfaces, e.g. Abis, Iub, S1 and X2, and their transport network implementation, i.e. map a particular S1 interface to the service, e.g. Virtual LANs (VLANs) or IP VPNs provided by the transport network;
- Monitoring and logging the QoS classes that individual radio network subscribers use in the transport network.

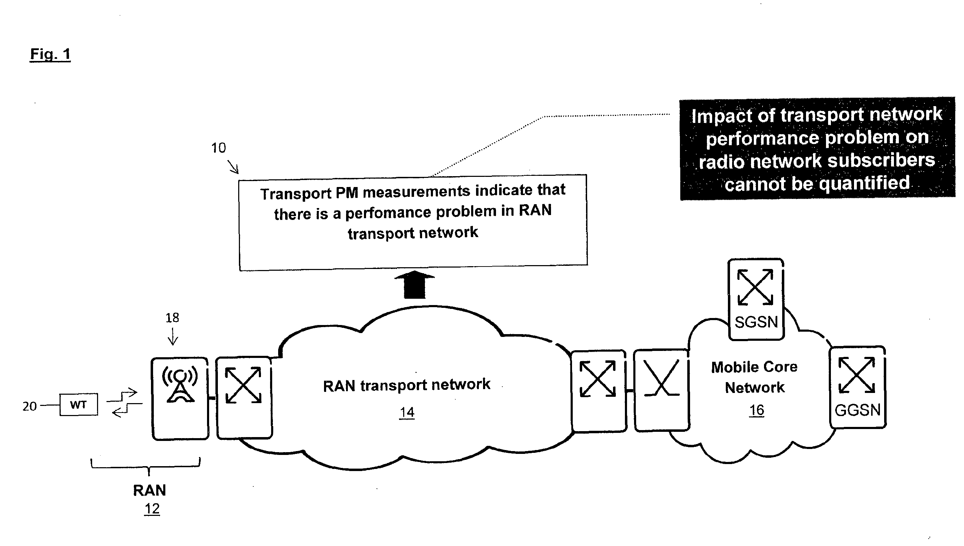

Fig. 1 is a block diagram of an exemplary wireless communication network 10 that includes a Radio Access Network (RAN) 12, a core network (CN) 16, and a transport network (TN) 14 that facilitates communications between the RAN 12 and CN 16. The TN 14 may include, for example, a number of routers and switches providing a path for traffic between the RAN 12 and CN 16. Within the RAN, a base station 18 supports wireless communication with one or more wireless terminals 20. As discussed above, in the past the RAN 14 has been treated as a "black box" such that the impact of TN performance problems on individual radio network subscribers cannot be quantified.

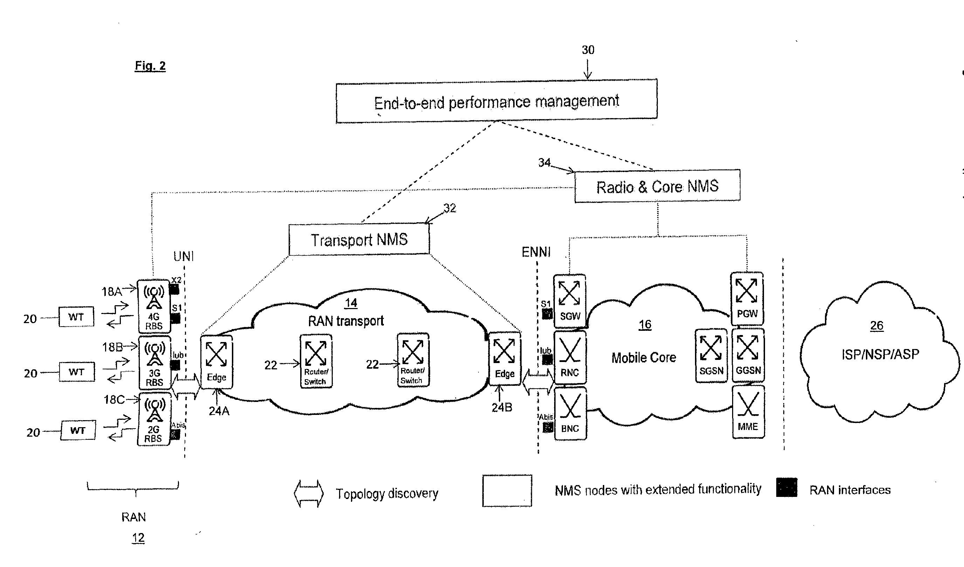

Fig. 2 is a block diagram illustrating an improved Network Management System (NMS) configuration for the network 10 of Fig. 1. As shown in Fig. 2, the TN 14 includes a plurality of switching nodes 22, which may include routers and/or switches, and also includes edge nodes 24A-B. Although illustrated as a single node, it is understood that each illustrated edge node 24A, 24B could include multiple edge nodes (e.g., one for each base station 18 in the RAN 12). The core network 16 provides a connection to a larger packet data network (PDN) 26 of one or more of an Internet Service Provider (ISP), Network Service Provider (NSP) or Application Service Provider (ASP). In Fig. 2, each node with an overlapping "L" indicator (e.g., RNC, BSC, MME, etc.) represents radio switching nodes that handle signaling (e.g., a RNC, BSC, MME, etc.). Meanwhile, nodes having an "X" indicator (e.g. SWG, SGSN, etc.) represent routers/switches/gateways/etc.

One or more user-to-network interfaces (UNIs) are formed between the RAN 12 and edge node 24A, and one or more external network-to-network interfaces (ENNIs) are formed between the core network 15 and edge node 24B. Thus, in one example there are multiple UNIs between base stations 18A-C and the RAN TN edge node 24A, and there are also multiple ENNIs between the SGW/RNC/BSC nodes and TN edge node 24B.

An overall end-to-end performance management system 30 is in communication with transport network NMS node 32, and separate radio and core network NMS node 34. It is understood that although each of the nodes 32, 34 is illustrated with a single box, that each node 32, 34 may actually contain multiple nodes. Additionally, in one example the features of the end-to-end performance management node are implemented in one of the nodes 32, 34.

In Fig. 2, the Network Management System (NMS) nodes, i.e., radio and core network NMS node 32, transport network NMS node 34, and the end-to-end performance management tool 30, are shown. In Figure 2, mobile technologies 2G, 3G and 4G are represented (see base stations 18A-C). The 2G RAN/CN nodes are 2G Radio Base Station (RBS) 18C and Base Station Controller (BSC). The 3G RAN/CN nodes are 3G RBS 18B, Radio Network Controller (RNC), Serving GPRS Support Node (SGSN) and Gateway GPRS Support Node (GGSN). The 4G RAN/CN nodes are 4G RBS 18A, Serving Gateway (SGW), Packet Data Network Gateway (PGW) and Mobility Management Entity (MME). The transport NMS manages nodes in the RAN transport network; these are typically routers and switches. The mobile core is connected to one or more Internet Service Provider (ISP), Network Service Provider (NSP) or Application Service Provider (ASP) networks. These are neither managed by transport NMS nor radio and core NMS.

Added functionality and an example functional distribution are illustrated in Fig. 2. The topology discovery function is not new, but its deployment on User to Network Interface (UNI) and External Network to Network Interface (ENNI) addresses a significant part of functionality of this embodiment.

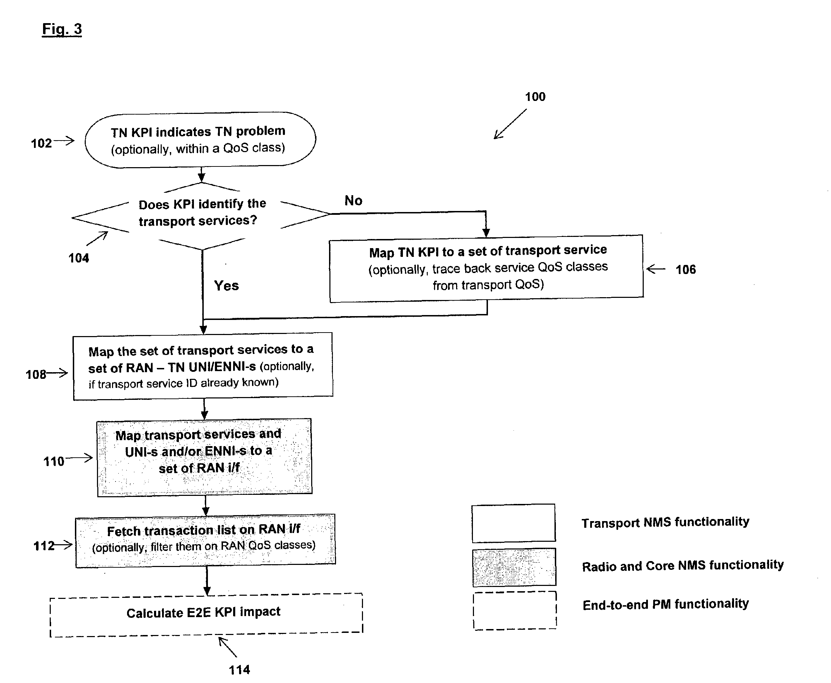

Fig. 3 shows a main flow chart of an exemplary method 100 of determining the impact of transport network (TN) performance at a subscriber level. The steps on the flow chart are implemented by the different NMS systems. In one example, steps 102-108 are performed by the transport NMS node 32, steps 110-112 are performed by the radio & core NMS node 34, and step 114 may be performed by end-to-end performance mnagement node 30 (or by either of the nodes 32, 34).

In some particular cases (e.g., if a particular transport service id is known in radio and core NMS) it is possible that there may not be a need for defining the relationship between transport service and RAN interfaces via the additional mapping step of UNI/ENNI-s. In this case, the step 108 of "Map the set of transport services to a set of UNI/ENNI-s" in Fig. 3 is not needed.

As to Fig. 3, the UNI/ENNI-s are standard interfaces visible from the transport NMS. The RAN interface, on the other hand, is a logical interface in the radio network (e.g., the S1 interface between eRBS and S-GW or the Iub interface between RBS and RNC). Determining the affected UNI/ENNI-s may be an intermediate step do determine (from the affected transport services) the RAN interfaces and, thus, cells, and then subscribers/mobile communication units. As will be appreciated, the terms subscribers and mobile communications units are partially used synonymous herein.

Each of the steps illustrated in Fig. 3 will be described in greater detail below:

### Map TN KPI to a set of transport services (step 106)

This functionality covers one or more of the following steps:
1. Identify the transport tunnels (e.g., MPLS label-switched path (LSP), Provider Backbone Bridge (PBB), etc.) over the link. This is done based on one or more of:
   i. Transport topology
   ii. Routing configuration
   iii. Routing event logs
2. Identify services that are mapped to the transport tunnels. This is done based on service inventory data.

### Map the set of transport services to a set of RAN - TN UNI/ENNI-s (step 108)

The radio and core NMS and the transport NMS has to use the same IDs for UNI and ENNI naming in order to make the binding between the transport and the radio network side of the UNI/ENNI. The IDs may be manually configured and maintained, or topology discovery methods may be run over the UNI/ENNI link in order to auto-discover far end system IDs. UNI/ENNI IDs may be formed automatically by e.g. lexicographically ordering and concatenating the connected systems ID.

Depending on the input transport KPI characteristics, e.g., if it was derived from active or passive measurements, the performance degradation may only impact a set of UNI/ENNI pairs of a given transport service.

This functionality filters out service UNI/ENNI-s that were not affected based on the routing configurations and event logs and based on the service to transport mappings (if applicable for the transport technology).

### Map transport services and UNI/ENNI-s to a set of RAN interfaces (step 110)

This functionality covers one or more of the following steps:
1. Identify the RAN nodes connected via the UNI/ENNI-s. This is done based on UNI/ENNI ID and configuration and cell/switch site topology
2. Identify the (logical) RAN interfaces, e.g., a particular S1 interface between a given eNB and S-Gw. This is done based on RAN node inventory data.

### Fetch transaction list on a RAN interface (step 112)

This functionality covers one or more of the following steps:
1. Map RAN interfaces to radio cells. This mapping is available from the inventory of radio and core NMS
2. Fetch per radio network subscriber transaction logs on impacted cells. This is part of the performance management extensions of the radio and core NMS.

### Calculate End-to-end KPI impact (step 114)

This functionality covers statistical analysis of the selected KPI-s. The following list contains example outputs:
- Identify affected cells
   ■ This can be performed by statistical analyses of KPIs in RAN/CN. Analysis of time series of the RAN/CN KPIs is needed to get the effect of the transport problem. It is possible to make decision based on statistical test that the KPI change in RAN/CN is significant or not.
- Count number of impacted radio network subscribers
   ■ This can be achieved by counting the different radio network subscribers connected to the affected cells.
- Deriving severity of the TN KPI degradation
   ■ Depending on the operator's requirements the severity of the transport problem can be derived either based on the KPI degradation in the affected cells or based on the number of impacted subscribers in the affected cells. The severity can also be derived from the combination of the RAN/CN KPI degradation and the number of impacted subscribers.

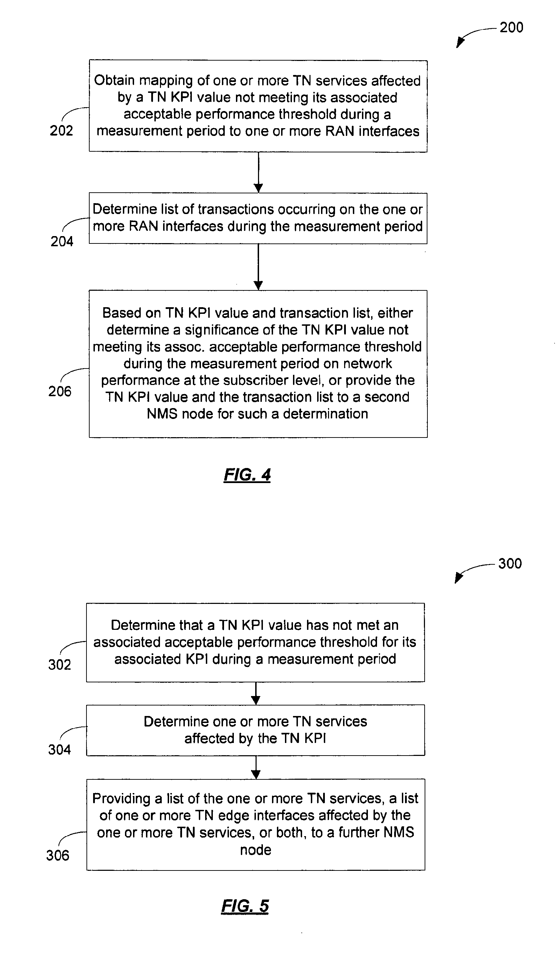

Fig. 4 illustrates an exemplary method 200 of either determining or facilitating the determination of the impact of transport network (TN) performance at a subscriber level, with the method being performed by a NMS node (e.g., NMS node 34).

A mapping is obtained of one or more TN services affected by a TN KPI value not meeting its associated acceptable performance threshold during a measurement period to one or more Radio Access Network (RAN) interfaces (step 202). A list of transactions occurring on the one or more RAN interfaces during the measurement period is determined (step 204). Based on the TN KPI value and the transaction list, either a significance of the TN KPI value not meeting its associated acceptable performance threshold during the measurement period on network performance at the subscriber level is determined, or the TN KPI value and the transaction list are provided to a further NMS node (e.g., Node 32) for such a determination (step 206).

In one example, step 202 corresponds to the receipt of information from step 108 (or 104/106 if 108 is not performed), step 204 corresponds to steps 110-112, and step 206 corresponds to step 114 or the providing of information to another node to perform step 114.

Fig. 5 illustrates another exemplary method 300 of either determining or facilitating the determination of the impact of TN performance issues at a subscriber level, with the method being performed by a NMS node (e.g., NMS node 32).

A determination is made that a TN KPI value has not met an associated acceptable performance threshold for its associated KPI during a measurement period (step 302). One or more TN services affected by the TN KPI are determined (step 304). A list of the one or more TN services, a list of one or more TN edge interfaces affected by the one or more TN services, or both, are provided to a further NMS node (e.g., node 34) (step 306).

In one example step 302 corresponds to step 102, step 304 corresponds to step 106 (or if step 106 is not performed the transition from step 104 to step 108 or 110), and step 306 corresponds to step 108 (or if 108 is not performed the transition to step 110).

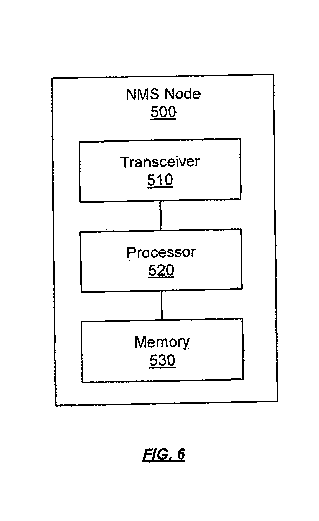

Fig. 6 illustrates an example NMS node 500 that includes a transceiver 510, processor 520 and memory 530. In one example the node 500 corresponds to node Radio & CN NMS node 34. In this example, the node 500 is operative to either determine or facilitate the determination of the impact of TN performance at a subscriber level. The processor 520 is configured to obtain a mapping of one or more TN services affected by a TN KPI value not meeting its associated acceptable performance threshold during a measurement period to one or more Radio Access Network (RAN) interfaces. The processor 520 is further configured to determine a list of transactions occurring on the one or more RAN interfaces during the measurement period. Based on the TN KPI value and the transaction list, the processor 520 is configured to either determine a significance of the TN KPI value not meeting its associated acceptable performance threshold during the measurement period on network performance at the subscriber level, or provide the TN KPI value and the transaction list to a second NMS node via the transceiver 510 for such a determination. The memory 530 stores instructions for configuring the NMS node to perform the described operations.

In one example, the node 500 corresponds to NMS node 32 (TN NMS). In this example, the processor 520 is configured to determine that a TN KPI value has not met an associated acceptable performance threshold for its associated KPI during a measurement period, and to determine one or more TN services affected by the TN KPI are determined. The processor 520 provides a list of the one or more TN services, a list of one or more TN edge interfaces affected by the one or more TN services, or both, to a second NMS node via the transceiver 510. The memory 530 stores instructions for configuring the TN NMS node to perform the described operations.

In either example, the processor 520 includes one or more processor circuits, including, for example, one or more microprocessors, microcontrollers, digital signal processors, or the like, and is also each configured with appropriate software and/or firmware to carry out one or more of the techniques discussed above (e.g., through software stored in memory 530).

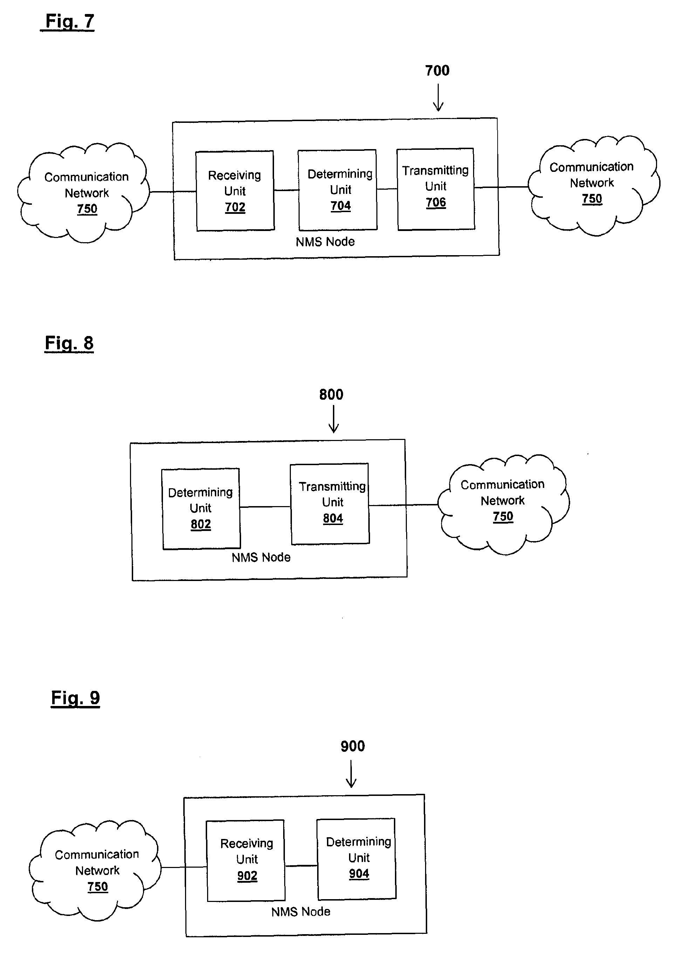

Now further embodiments of the technique presented herein will be discussed with reference to Figs. 7 to 12. It should be noted that the following embodiments can be combined with the embodiments that have been described above. In particular, individual ones of the network nodes discussed hereinafter may perform the methods, steps and operations discussed above with reference to similar network nodes.

Fig. 7 shows an exemplary embodiment of a NMS node 700 of a communication network 750 comprising a transport network and a radio access network connected to the transport network.

The NMS node 700 comprises a receiving unit 702 configured to receive a mapping of one or more TN services to one or more RAN interfaces via the communication network 750, wherein the TN services are affected by a TN KPI value not meeting a network performance condition during a performance measurement period. The NMS node 700 further comprises a determining unit 704 configured to determine a list of subscriber transactions occurring on the one or more RAN interfaces during the measurement period, and to determine, based on the TN KPI value and the transaction list, an impact of the TN KPI value not meeting the network performance condition on network performance at the subscriber level.

The NMS node 700 may further comprise a transmitting unit 706 for transmitting the TN KPI value and the transaction list to a further NMS node via the communication network 750.

Fig. 8 shows an exemplary embodiment of another NMS node 800 of a communication network 750 comprising a transport network and a radio access network connected to the transport network.

The NMS node 800 comprises a determining unit 802 configured to determine whether a TN KPI value of the transport network has not met a network performance condition during a measurement period. The determining unit 802 is further configured to determine one or more TN services affected by the TN KPI. Further, a transmitting unit 804 is provided configured to transmit a list of the one or more affected TN services, a list of one or more TN edge interfaces affected by the one or more affected TN services, or both, from the NMS node 800 to a further NMS node of the communication network 750.

Fig. 9 shows an exemplary embodiment of a still further NMS node 900 of a communication network 750 comprising a transport network and a radio access network connected to the transport network.

The NMS node 900 comprises a receiving unit 902 configured to receive a transaction list indicating transactions occurring on one or more RAN interfaces during a measurement period, the transactions stemming from one or more TN services affected by a TN KPI value of the transport network which has not met a network performance condition during a measurement period. The NMS node 900 further comprises a determining unit 904 configured to determine, based on the TN KPI value and the transaction list, an impact of the TN KPI not meeting the network performance condition during the measurement period on the network performance of the communication network at a subscriber level.

Using the NMS nodes 700, 800, and 900, or the ones of any of the further embodiments as described above, various methods can be carried out as described in the following.

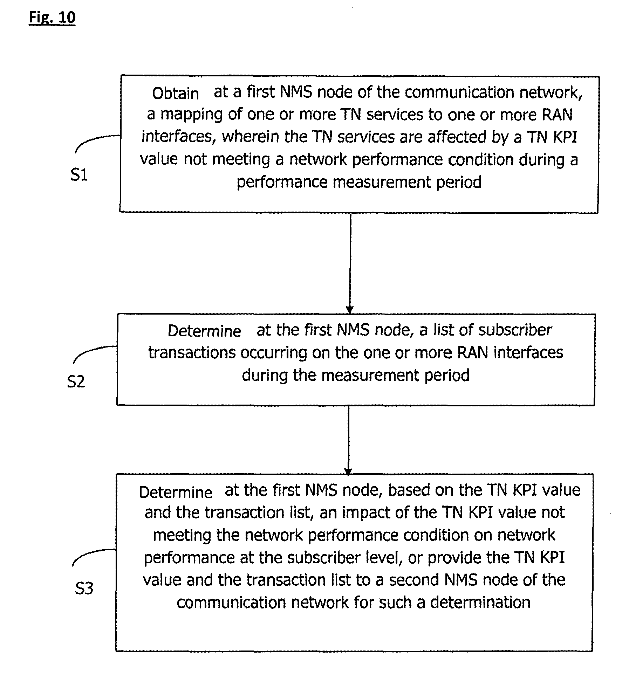

Fig. 10 shows an exemplary embodiment of a method which determines, at a subscriber level, an impact of a performance of a transport network in communication network 750.

At step S1, at a first network management subsystem (NMS) node 700 of the communication network 750, a mapping of one or more TN services to one or more RAN interfaces is obtained, wherein the TN services are affected by a TN KPI value not meeting a network performance condition during a performance measurement period. At step S2, at the first NMS node 700, a list of subscriber transactions occurring on the one or more RAN interfaces during the measurement period is determined. At step S3, at the first NMS node 700, based on the TN KPI value and the transaction list, an impact of the TN KPI value not meeting the network performance condition on network performance at the subscriber level is determined. Alternatively, at S3, the TN KPI value and the transaction list are provided to a second NMS node 900 of the communication network 750 for such a determination.

Step S1 may comprise receiving a first mapping of one or more affected TN services to one or more TN edge interfaces, and generating a second mapping that maps the one or more TN edge interfaces to the one or more RAN interfaces.

Step S1 may also comprise determining, at a third NMS node 800, whether the TN KPI value has not met the network performance condition during the measurement period, determining one or more TN services affected by the TN KPI, and providing a list of the one or more affected TN services and a list of one or more TN edge interfaces affected by the one or more affected TN services as the first mapping to the first NMS node 700. In this way, the effort to carry out steps S1 to S3 can be distributed over a plurality of NMS nodes (NMS nodes 700 and 800), thereby speeding up the impact determining procedure.

Step S3 may for example comprise identifying one or more groups of subscribers connected to cells of the radio access network affected by the list of transactions and/or determining a quantity of wireless terminals connected to the affected cells and/or performing a statistical analysis based on a deviation between the TN KPI value and its associated network performance condition.

Step S3 may be carried out using for example the second NMS node 900 and may comprise receiving, at the second NMS node 900 via the communication network 750, the TN KPI value not meeting its associated network performance condition and the transaction list indicating transactions occurring on one or more RAN interfaces during the measurement period. Based on the TN KPI value and the transaction list, an impact of the TN KPI value on network performance at the subscriber level may be determined. In this way, the effort to carry out steps S1 to S3 can be even further distributed over a plurality of NMS nodes (NMS nodes 700, 800, and 900), thereby speeding up the impact determining procedure.

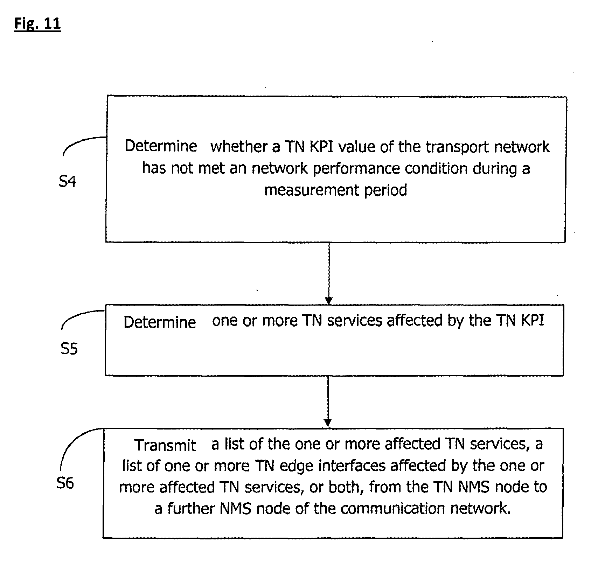

The first NMS node 700 may be a RAN & CN NMS node, the second NMS node 900 may be an end-to-end performance management NMS node, and the third NMS node 800 may be a TN NMS node. Other node configurations are also possible. Fig. 11 shows an exemplary embodiment of a method of operating a TN NMS node 800 of communication network 750.

At step S4, it is determined whether a TN KPI value of the transport network has not met a network performance condition during a measurement period. At step S5, one or more TN services affected by the TN KPI are determined, and at step S6, a list of the one or more affected TN services, a list of one or more TN edge interfaces affected by the one or more affected TN services, or both, are transmitted from the TN NMS 800 node to the NMS node 700 of the communication network 750.

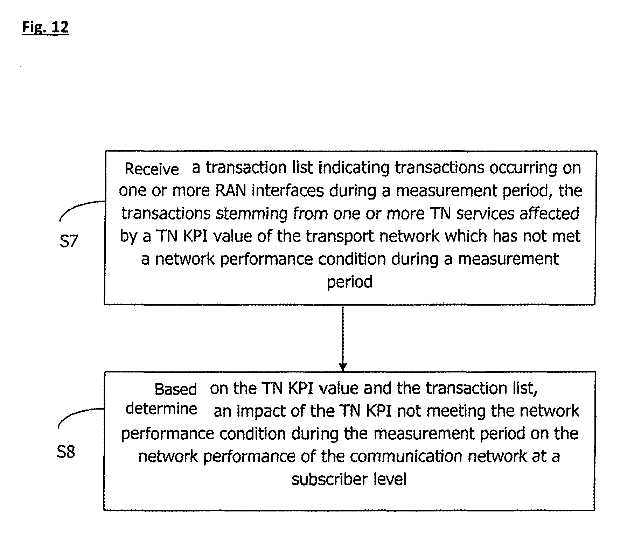

Fig. 12 shows an exemplary embodiment of a method of operating an end-to-end performance management NMS node 900 of communication network 750.

At step S7, a transaction list indicating transactions occurring on one or more RAN interfaces during a measurement period is determined, the transactions stemming from one or more TN services affected by a TN KPI value of the transport network which has not met a network performance condition during a measurement period. At step S8, based on the TN KPI value and the transaction list, an impact of the TN KPI not meeting the network performance condition during the measurement period on the network performance of the communication network 750 at a subscriber level is determined.

In the context of Fig. 2, the first NMS node 700 of Fig. 7 may correspond to RAN & CN NMS node 34, the second NMS node 900 of Fig. 9 may correspond to end-to-end performance management NMS node 30, and the third NMS node 800 of Fig. 8 may correspond to TN NMS node 32. Accordingly, nodes 700, 800 and 900 may also be configured to perform the methods, steps and functions described herein with respect to nodes 34, 32 and 30, respectively.

The gist of certain embodiments can be expressed as follows. Upon occurrence of a network problem (indicated by, e.g., a TN KPI) in a transport network, it is first determined which services are affected by the network problem (mapping step 1: network problem (KPI) -> services). Then, it is determined which network paths (comprising, e.g., hardware interfaces like edge nodes of the transport network or intermediate nodes of the transport network connecting the edge nodes) are used by the affected services (mapping step 2: services -> communication paths, wherein the communication paths can in particular be reflected by TN edge interfaces/RAN interfaces). Then, communication traffic (e.g., transactions) on the determined network paths is determined (mapping step 3: communication paths -> traffic streams). From the traffic streams, conclusions may be drawn as to which mobile communication units are affected and how much.

In mapping step 2 (services -> communication paths), the edge nodes (towards radio base stations) may be determined. The core nodes do not have to be included in the communication paths.

Some exemplary advantages of the methods and apparatus described above include the following. First, the severity of a transport bottleneck can be quantified including its effect on radio network subscribers. In some realizations, the number of impacted radio network subscribers will be known. Moreover, the effect of new transport network features, or node deployments, on radio network subscribers can be formalized and shown.

It is believed that many advantages of the present disclosure will be fully understood from the foregoing description, and it will be apparent that various changes may be made in the form, construction and arrangement of the exemplary aspects thereof without departing from the scope of the invention, or without sacrificing all of its advantages. Because the invention can be varied in many ways, it will be recognized that the invention should be limited by the scope of the claims that follow.

## Claims

1. A method of determining, at a subscriber level, an impact of performance degradation of a transport network (14), TN, in a communication network (750) comprising the transport network (14) and a radio access network (12), RAN, connected to the transport network (14),
the method comprising:
obtaining (S1), at a first network management subsystem, NMS, node (700, 34) of the communication network (750), a mapping of one or more TN services to one or more radio access network, RAN, interfaces, wherein the TN services are affected by a TN key performance indicator, KPI, value not meeting a network performance condition during a performance measurement period;
determining (S2), at the first NMS node (700, 34), a list of subscriber transactions occurring on the one or more RAN interfaces during the measurement period; and
determining (S3), at the first NMS node (700, 34), based on the TN KPI value and the transaction list, an impact of the TN KPI value not meeting the network performance condition on network performance at the subscriber level, or provide the TN KPI value and the transaction list to a second NMS node (900, 30) of the communication network (750) for such a determination.

2. The method according to claim 1,
wherein the network performance condition is an acceptable network performance threshold associated with the KPI.

3. The method according to claim 1 or 2,
wherein the list of transactions is obtained from subscriber transaction logs.

4. The method according to anyone of claims 1 to 3,
wherein the obtaining step comprises:
receiving a first mapping of one or more affected TN services to one or more TN edge interfaces; and
generating a second mapping that maps the one or more TN edge interfaces to the one or more RAN interfaces.

5. The method according to claim 4,
the method further comprising:
determining, at a third NMS node (800, 32), whether the TN KPI value has not met the network performance condition during the measurement period;
determining one or more TN services affected by the TN KPI; and
providing a list of the one or more affected TN services and a list of one or more TN edge interfaces affected by the one or more affected TN services as the first mapping to the first NMS node (700, 34).

6. The method according to any one of claims 1 to 5,
wherein determining the impact comprises one or more of:
identifying one or more groups of subscribers connected to cells of the radio access network (12) affected by the list of transactions; and
determining a quantity of wireless terminals (20) connected to the affected cells; and
performing a statistical analysis based on a deviation between the TN KPI value and its associated network performance condition.

7. The method according to any one of claims 1 to 6,
wherein determining the impact comprises:
receiving, at the second NMS node (900, 30), the TN KPI value not meeting its associated network performance condition and the transaction list indicating transactions occurring on one or more RAN interfaces during the measurement period; and
based on the TN KPI value and the transaction list, determining an impact of the TN KPI value on network performance at the subscriber level.

8. The method according to any one of claims 1 to 7,
wherein the first NMS node (700, 34) is a RAN & Core Network NMS node, the second NMS node (900, 30) is an end-to-end performance management NMS node, and the third NMS node (800, 32) is a TN NMS node.

9. The method according to at least claim 4,
wherein the TN edge interface includes at least one user-to-network interface, UNI, connecting the radio access network (12) to the transport network (14), or at least one external network-to-network interface, ENNI, connecting a core network (16) to the transport network (14).

10. A method of operating a transport network (14), TN, management subsystem, NMS, node (800) of a communication network (750) comprising the transport network (14) and a radio access network (12), RAN, connected to the transport network (14),
the method comprising:
determining (S4) whether a TN key performance identifier, KPI, value of the transport network (14) has not met an network performance condition during a measurement period;
determining (S5) one or more TN services affected by the TN KPI; and
transmitting (S6) a list of the one or more affected TN services, a list of one or more TN edge interfaces affected by the one or more affected TN services, or both, from the TN NMS node to a NMS node of the communication network (750).

11. A method of operating an end-to-end performance management network management subsystem, NMS, node (900) of a communication network (750) comprising a transport network (14), TN, and a radio access network (12), RAN, connected to the transport network (14),
the method comprising:
receiving (S7) a transaction list indicating transactions occurring on one or more RAN interfaces during a measurement period, the transactions stemming from one or more TN services affected by a TN key performance identifier, KPI, value of the transport network (14) which has not met a network performance condition during a measurement period; and
based on the TN KPI value and the transaction list, determining (S8) an impact of the TN KPI not meeting the network performance condition during the measurement period on the network performance of the communication network (750) at a subscriber level.

12. A computer program product comprising program code portions for performing the steps of any one of the preceding claims when the computer program product is executed on one or more computing devices.

13. The computer program product of claim 12, stored on a computer-readable recording medium.

14. A network management subsystem, NMS, node (700, 34) of a communication network (750) comprising a transport network (14), TN, and a radio access network (12), RAN, connected to the transport network (14),
the NMS node (700, 34) comprising:
a receiving unit (702) configured to receive a mapping of one or more TN services to one or more radio access network (12), RAN, interfaces, wherein the TN services are affected by a TN key performance indicator, KPI, value not meeting a network performance condition during a performance measurement period;
a determining unit (704) configured to determine a list of subscriber transactions occurring on the one or more RAN interfaces during the measurement period, and to determine, based on the TN KPI value and the transaction list, an impact of the TN KPI value not meeting the network performance condition on network performance at the subscriber level.

15. The NMS node (700, 34) according to claim 14, further comprising a transmitting unit (706) for transmitting the TN KPI value and the transaction list to a further NMS node.

16. A transport network, TN, management subsystem, NMS, node (800, 32) of a communication network (750) comprising a transport network (14), TN, and a radio access network (12), RAN, connected to the transport network (14),
the NMS node (800, 32) comprising:
a determining unit (802) configured to determine whether a TN key performance identifier, KPI, value of the transport network (14) has not met an network performance condition during a measurement period, and configured to determine one or more TN services affected by the TN KPI; and
a transmitting unit (804) configured to transmit a list of the one or more affected TN services, a list of one or more TN edge interfaces affected by the one or more affected TN services, or both, from the TN NMS node (800) to a NMS node (700, 34) of the communication network (750).

17. An end-to-end performance management subsystem, NMS, node (900, 30) of a communication network (750) comprising a transport network (14) and a radio access network (12), RAN, connected to the transport network (14),
the NMS node (900, 30) comprising:
a receiving unit (902) configured to receive a transaction list indicating transactions occurring on one or more RAN interfaces during a measurement period, the transactions stemming from one or more TN services affected by a TN key performance identifier, KPI, value of the transport network (14) which has not met a network performance condition during a measurement period; and
a determining unit (904) configured to determine, based on the TN KPI value and the transaction list, an impact of the TN KPI not meeting the network performance condition during the measurement period on the network performance of the communication network (750) at a subscriber level.
